# EUROPÄISCHE PATENTSCHRIFT

(11) **EP 0 518 074 B1**
(45) Veröffentlichungstag und Bekanntmachung des Hinweises auf die Patenterteilung: **23.08.1995**
(21) Anmeldenummer: 92108212.9
(22) Anmeldetag: 15.05.1992
(51) Int. Cl.: B21B 43/00, B65G 33/06

(54) **Knüppel-Auflaufrollgang vor Kühlbetten**
Billet entry rollerway for cooling beds
Train à rouleaux d'amenée de billettes aux bits de refroidissement

(30) Priorität: 10.05.1991 DE 4115363
(43) Veröffentlichungstag der Anmeldung: 16.12.1992
(73) Patentinhaber: SMS SCHLOEMANN-SIEMAG AKTIENGESELLSCHAFT, 40237 Düsseldorf (DE)
(72) Erfinder: Hartmann, Hans Heinrich, Aliquippa PA 15001 (US); Reismann, Hans Jürgen, W-4000 Düsseldorf 31 (DE); Drügh, Hans-Peter, W-5352 Zülpich (DE)
(74) Vertreter: Müller, Gerd, Dipl.-Ing.

(56) Entgegenhaltungen:
- DE-A- 2 809 586
- FR-A- 2 116 247
- US-A- 2 650 694
- US-A- 2 726 754
- US-A- 2 976 980
- US-A- 3 168 183

## Beschreibung

Die Erfindung betrifft einen Knüppel-Auflaufrollgang vor Kühlbetten, der aus parallel zu den Rollgangsrollen angeordneten, kontinuierlich angetriebenen, Schneckengänge mit einem Nullsteigungsbereich aufweisenden Querförderrollen besteht, die das Walzgut von den Rollgangsrollen übernehmen und quer zur Transportrichtung auf das Kühlbett überleiten.

Bevor die aus einer Walzstraße kommenden, fertiggewalzten und in Handelslängen unterteilten Knüppelstränge auf das Kühlbett übergeleitet werden, ist es erforderlich, die Knüppel bis zum Stillstand abzubremsen; erst danach werden sie im Kühlbettakt auf das Kühlbett übergehoben bzw. rutschen sie in bekannter Weise auf die erste Rast des Kühlbettes. Da allerdings auf einer Walzstraße Knüppel mit verschiedenen Abmessungen gewalzt werden, läßt es sich nicht vermeiden, daß die Knüppel mit - von Abmessung zu Abmessung - zum Teil erheblich voneinander abweichenden Geschwindigkeiten auf den Rollgang auflaufen; denn im Querschnitt kleinere Knüppel werden im Vergleich zu der auf der Walzstraße zu walzenden größtmöglichen Knüppelabmessung mit einer mehrfach höheren Geschwindigkeit gewalzt.

Die abhängig vom Walzprogramm wechselnden Auflaufgeschwindigkeiten führen zu verschieden langen Bremswegen der Knüppel, die zum Überleiten auf das Kühlbett zum Stillstand kommen müssen. Um dennoch einen ungestörten Betriebsablauf und eine Belegung des Kühlbettes im Kühlbett-Takt zu erreichen, sind bei bekannten Kühlbetten erhebliche Steuerungsmaßnahmen und ein großer baulicher Aufwand erforderlich, wie beispielsweise das Kuppeln mehrerer Rollen, was entsprechende Kupplungen erfordert.

Ein mit dem eingangs beschriebenen Knüppel- Auflaufrollgang weitestgehend übereinstimmender Rollgang ist durch die US-A-2 726 754 bekanntgeworden; abweichend sind dort die Rollgangsrollen schräg angeordnet, so daß das Walzgut (Rohre) beim Fördern sowohl in Transportrichtung als auch seitlich gegen eine Führung bewegt werden kann. Die Querförderrollen dieses Rollgangs besitzen zwei Bereiche mit einer Null-Steigung und auf den übrigen Bereichen derart ausgebildete Schneckengang-Abschnitte, daß der Einlaufbereich schnellstmöglich geräumt werden kann, d.h. durch ein unverzügliches Querfördern Platz für ein nachfolgend einlaufendes Rohr geschaffen wird. Die Querförderrollen sind demnach in zwei Bereiche unterteilt, nämlich in eine Einlaufund eine Abwurfposition, aus der die stetig quergeförderten Rohre dann an ein Kühlbett abgegeben werden, das ebenfalls aus Schnecken-Förderrollen besteht.

Der Erfindung liegt die Aufgabe zugrunde, einen Knüppel-Auflaufrollgang der eingangs genannten Art mit geringem maschinentechnischem Aufwand an wechselnde Walzgeschwindigkeiten anzupassen und ein einfaches Überleiten der Knüppel auf ein Kühlbett zu ermöglichen.

Diese Aufgabe wird erfindungsgemäß dadurch gelöst, daß die Querförderrollen in vier Bereiche unterteilt sind, und zwar eine Einlaufposition, eine Zwischenposition, eine Bremsposition sowie eine Abwurfposition aufweisen, daß die gleichen Umfangsabschnitte jeder Querförderrolle in der Einlaufposition mit einer großen Steigung, in der Bremsposition mit einer Null-Steigung und auf entsprechenden Abschnitten der Zwischenposition und der Abwurfposition mit einer Querfördersteigung der Schneckengänge versehen sind, wobei Knüppel in den Einlauf- und Bremspositionen verharren, während andere Knüppel unbeeinflußt davon ihren Quertransport in den Zwischen- und Abwurfpositionen fortsetzen können. Aufgrund der Steigungsunterschiede wird zwischen der Einlaufposition des Knüppels und der Bremsposition auf dem Rollgang noch eine dritte, nämlich eine Zwischenposition erreicht; ein die Zwischenposition einnehmender Knüppel wird zwar mit konstanter Geschwindigkeit (Rollgangsgeschwindigkeit) weitertransportiert, doch zunächst nicht quergefördert, weil dieser Knüppel bedingt durch den einlaufseitig großen Steigungsbereich keiner Querförderbewegung des Schneckengangs ausgesetzt ist. Aus der Zwischenposition wird das Bremsen eingeleitet, wobei sich - vorzugsweise im Verlaufe einer 180°-Drehung der Querförderrollen - dann ein seitliches Verschieben, d.h. Querfördern des Knüppels in die Bremsposition ergibt, ohne das ein nachfolgend in die Einlaufposition gelangender Folgeknüppel von dieser Querförderbewegung beeinflußt wird; der Folgeknüppel bleibt beim Verschieben des vorhergehenden Knüppels unverändert in der Einlaufposition. Ein zeitweises Verharren der Knüppel, d.h. ohne einer Querförderbewegung zu unterliegen, stellt sich weiterhin auch dann ein, wenn ein Knüppel den die Null-Steigung aufweisenden Schneckengang der Bremsposition erreicht hat.

Es empfiehlt sich, im Bremsbereich eine Bremsrutsche anzuordnen, die die Knüppel in der Bremsposition bremst.

Wenn nach einer bevorzugten Ausgestaltung der Erfindung die Steigung des Schneckengangs der Querförderrollen im Bereich der Einlaufposition zumindest der maximal vorkommenden Knüppelabmessung entspricht und der im Bereich der Bremsposition verlaufende Schneckengang auf einem 180°- Abschnitt der Querförderrollen mit einer Null - Steigung versehen ist, lassen sich die die Knüppel verschiebenden Querförderrollen mit dem vorzugsweise als Rechenkühlbett ausgebildeten Wende- Kühlbett so koordinieren, daß ein Knüppel nach einer Umdrehung der Querförderrollen in der Bremsposition angelangt ist, d.h. der Bremsrutsche aufliegt und dort zum Stillstand kommt. Nach einer weiteren, somit zweiten vollen Umdrehung der Querförderrollen wird der Knüppel von der Bremsrutsche auf das hinsichtlich seiner Teilung (Rast-Ausnehmungen) auf die von den Förderrollen bewirkte Verschiebesequenz abgestimmte Rechen- Kühlbett übergeleitet (abgeworfen); gleichzeitig damit wird ein Folgeknüppel aus der Einlaufposition in die Bremsposition quergefördert.

Der die Steigung definierende Winkelwert der Rollenumdrehung ist nicht an eine 180°- Einteilung gebunden. Er kann beliebig gewählt werden, wobei er allerdings vorne, d.h. an den von dem Kühlbett abgewandten Enden der Förderrollen stets größer sein muß als hinten, d.h. an den dem Kühlbett zugewandten Enden. Die Steigung des Schneckenganges an den hinteren Rollenenden ist außerdem noch abhängig von der Zahnteilung des die Knüppel übernehmenden Rechenkühlbettes.

Der beschriebene Betriebsablauf wiederholt sich entsprechend der Zahl der einlaufenden Knüppel, wobei der im Bremsbereich auf eine 180°- Abschnitt der Querförderrollen ohne Steigung ausgebildete Schneckengang sicherstellt, daß der seine Lage in der Bremsposition einnehmende Knüppel beim Verschieben eines Folgeknüppels - was eine 180°- Drehung der Förderrollen erfordert - in die Zwischenposition nicht beeinflußt wird. Egal, mit welcher Geschwindigkeit die Walzstraße arbeitet, verbleibt ein Knüppel stets solange in der abgebremsten Ruhelage, bis ein Folgeknüppel in die Bremsposition gelangt ist; erst dann wird der vorhergehende Knüppel auf das Kühlbett übergeleitet. Die Querförderrollen erhalten ihren Soll- Wert von einer übergeordneten Steuerung der Walzstraße; sie werden von drehzahlgeregelten Gleichstrommotoren angetrieben, und ihre Ausgangsposition für die jeweiligen Drehungen von vorzugsweise 180° wird elektromechanisch mittels eines Überwachungssystems eingehalten.

Die Querförderrollen können mit die Schneckengänge bildenden Wulsten versehen sein, die sich beispielsweise durch Schweißen auftragen lassen, so daß sich auch bestehende Rollgänge nachträglich umrüsten lassen, ohne neue Rollen zu benötigen. Bei neu gefertigten Rollen können die Schneckengänge gleich mit angegossen werden. Bedingt durch die Steigung der Schneckengänge kommen die Knüppel bei jeder 180°- Drehung der Querförderrollen von einer Position in die nächste, mit den beschriebenen zwischenzeitlichen Ruhelagen. Beim Steigungsmaß muß für den Schneckengang am vorderen Rollenende zumindest das 2-fache der am größten zu walzenden Knüppelabmessung einschließlich der Dicke des den Schneckengang bildenden Wulstes zugrundegelegt werden.

Vorteilhaft können die dem Kühlbett zugewandten Enden der Querförderrollen zum Überleiten der Knüppel aus der ersten in die zweite Rast der Rechen des Kühlbettes ausgebildet sein. Dies ermöglicht bei kleinen Knüppelabmessungen eine Doppelbelegung des Kühlbettes und damit eine schnelle Taktfolge; hingegen wird bei großen Knüppelabmessungen nur jede zweite Rast belegt.

Die Erfindung wird nachfolgend anhand des in den Zeichnungen dargestellten Ausführungsbeispiels des näheren erläutert. Es zeigen:
- Fig. 1: einen Auflaufrollgang neben eine Kühlbett, schematisch in der Draufsicht dargestellt; und
- Fig.2a-k: in schematischer Seitenansicht eine Förderrolle eines Knüppel auf ein Rechenkühlbett überleitenden Querförderers, in verschiedenen Betriebsstufen dargestellt.

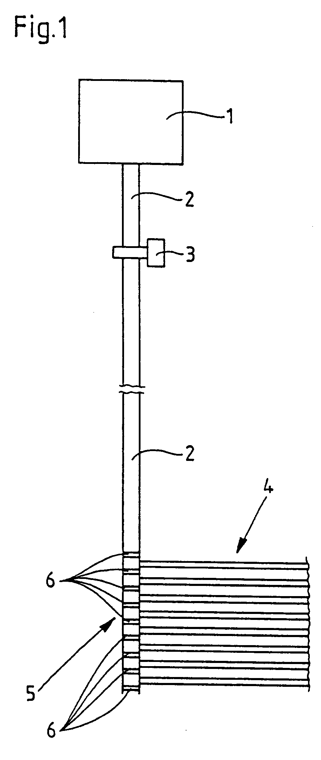

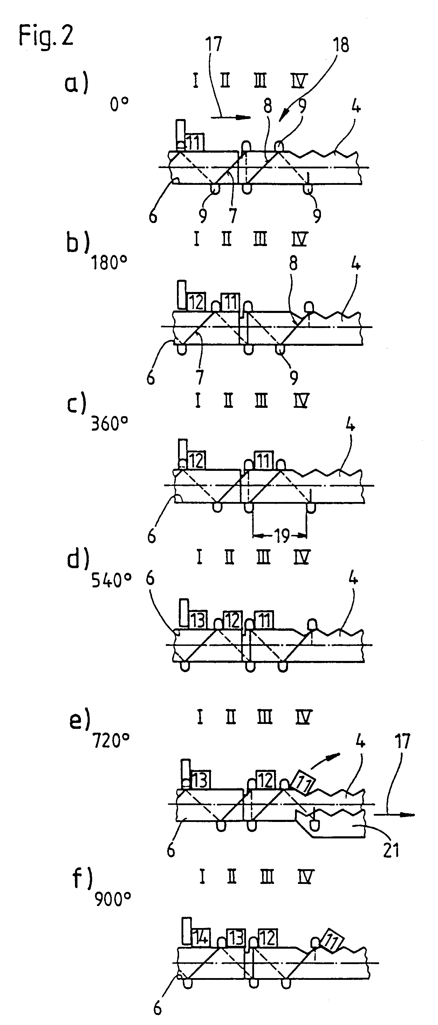

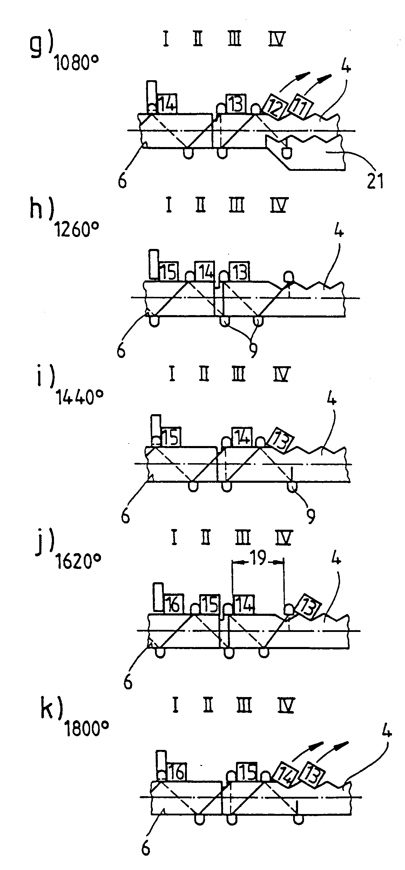

Einer Walzstraße 1 schließt sich ein Auflaufrollgang 2 mit darin integrierter Teilschere 3 zum Unterteilen des Walzstranges in Kühlbettlängen an, die sich nach den Längenabmessungen eines nachgeordneten, als Rechenkühlbett ausgebildeten Wendekühlbettes 4 und nach den vom Kühlbett- Takt abhängigen, zulässigen minimalen bzw. maximalen Abmessungen der Teillängen richten. Dem Kühlbett 4 ist ein Querförderer 5 vorgeschaltet, der aus zahlreichen, parallel zu den nicht dargestellten Rollgangsrollen angeordneten, in Fig. 1 durch einen dicken Strich gekennzeichneten Querförderrollen 6 besteht. Diese sind mit sich schneckenförmig über die Rollenlänge erstreckenden, Schneckengänge 7, 8 mit unterschiedlicher Steigung bildenden Wulsten 9 versehen (vgl. Fig.2).

Wie im einzelnen in den Fig. 2a bis 2k am Beispiel von sechs auf den Querförderer 5 auflaufenden, mit den Ziffern 11 bis 16 versehenen Knüppeln dargestellt wird, gelangt der in der Förderrichtung 17 auf das Kühlbett 4 überzuleitende Knüppel 11 an den von dem Kühlbett 4 abgewandten Enden der Querförderrollen 6 in der Einlaufposition I auf die Querförderrollen 6. Die Wegstrecke von der Einlaufposition in Querförderrichtung 17 zum Kühlbett 4 ist - in der angegebenen Reihenfolge - außerdem in eine Zwischenposition II, eine Bremsposition III und eine Abwurfposition IV unterteilt. In einem dem Kühlbett 4 zugewandten Bremsbereich 18 des Querförderers ist eine nicht dargestellte Bremsrutsche angeordnet, die die Knüppel 11 bis 16 vor dem Abwerfen bzw. Überleiten auf das Kühlbett 4 bis zum Stillstand abbremst.

Die Steigung des Schneckenganges 7 der Querförderrollen 6 entspricht dem 2-fachen der maximal vorkommenden Knüppelabmessung zuzüglich der Wanddicke des Wulstes 9 (vergl. 2.B. Fig.2b). Bei einer 180°- Drehung der Querförderrollen 6 gelangt der Knüppel 11 aus der Einlaufposition I in die Zwischenposition II und macht somit Platz für den auf die Querförderrollen 6 auflaufenden ersten Folgeknüppel 12 (vgl. a und b in Fig.2). Der die Zwischenposition II einnehmende, erste Knüppel 11 wird zunächst noch mit der konstanten Geschwindigkeit des Rollganges weitertransportiert, bevor er dann aus dieser Position heraus durch ein von dem Schneckengang 7 bewirktes Querfördern in die Bremsposition III des Bremsbereiches 18, d.h. auf die dort angeordnete Bremsrutsche gelangt; wie sich aus der die Förderrollen 6 nach einer vollen Umdrehung darstellenden Fig. 2 c ergibt, bleibt während der Zeit des Querförderns des Knüppels 11 der Folgeknüppel 12 in der Einlaufposition I. Erst wenn der zweite Folgeknüppel 13 den Bereich der Einlaufposition I der Querförderrollen 6 erreicht hat, wird der vorhergehende Folgeknüppel 12 in die benachbarte, d.h. die Zwischenposition II verschoben (vgl. Fig.2d). Dabei wird allerdings der erste Knüppel 11 nicht weitertransportiert, der vielmehr in der Bremsposition III verharrt.

Das Verschieben des ersten Folgeknüppels 12, ohne den Knüppel 11 zu beeinflussen, wird dadurch erreicht, daß der im Bremsbereich 18 ausgebildete Schneckengang 8 auf einem in Fig. 2c schematisch gekennzeichneten 180°- Abschnitt 19 eine Null - Steigung aufweist. Wie sich aus Fig. 2d ergibt, liegen die bis jetzt aufgelaufenen Knüppel 11 bis 13 nach drei 180°- Drehungen der Querförderrollen 6 in den Positionen I bis III unmittelbar nebeneinander.

Bei einer weiteren 180°- Drehung, wie in Fig. 2e dargestellt, gelangt der Knüppel 11 aufgrund der mit unterschiedlichen Steigungen ausgebildeten Schneckengänge 7, 8 in die Abwurfposition IV und der erste Folgeknüppel 12 in die Bremsposition III, während der zweite Folgeknüppel 13 in der Einlaufposition I bleibt. Der Knüppel 11 gelangt aus der Abwurfposition IV auf das mit gezackten Aufnahmeausnehmungen bzw. Rasten versehene Wendekühlbett 4, wird dort von Rechen (Hubbalken) 21 übernommen und während des taktweisen Vorwärtsbewegens in Querförderrichtung 17 gleichzeitig gewendet.

Wie in Fig. 2g schematisch angedeutet ist, sind die dem Kühlbett 4 zugewandten Enden der Querförderrollen 6 so ausgebildet, daß die Knüppel 11 bis 16 von den Querförderrollen 6 aus der ersten Rast der Rechen 21 in die zweite Rast transportiert und erst danach von den beweglichen Rechen 21 des Kühlbettes 4 taktweise von Rast zu Rast weitergefördert werden. Auf diese Weise kann bei kleinen Knüppelabmessungen eine Doppelbelegung des Kühlbettes 4 erreicht werden; bei großen Knüppelabmessungen wird aus Platzgründen hingegen nur jede zweite Rast der Rechen 21 belegt.

Der vorbeschriebene Ablauf wiederholt sich bei jedem neu auflaufenden Folgeknüppel 14 bis 16 mit jeder 180°- Drehung der Querförderrollen 6, wie in den Fig. 2f bis 2k verdeutlicht wird, wobei Fig. 2k die Situation nach fünf vollen Rollen- Umdrehungen (1800°) darstellt. Gleichgültig jedoch, mit welcher Geschwindigkeit die Knüppel auf die Querförderrollen 6 auflaufen, wird während ihres Transportes in Ouerförderrichtung 17 aufgrund der unterschiedlichen Steigungen der Schneckengänge 7,8 erreicht, daß während des Verschiebens eines Knüppels in die Bremsposition III ein Folgeknüppel unverändert in der Einlaufposition I bleibt und der Abstand zwischen eine sich in der Abwurfposition IV und einem sich in der Bremsposition III befindenden Knüppel stets konstant gehalten werden kann.

## Patentansprüche

1. Knüppel- Auflaufrollgang (2) vor Kühlbetten (4), der aus parallel zu den Rollgangsrollen angeordneten, kontinuierlich angetriebenen, Schneckengänge (7,8) mit einem Null-Steigungsbereich aufweisenden Querförderrollen (6) besteht, die das Walzgut (11 bis 16) von den Rollgangsrollen übernehmen und quer zur Tranportrichtung auf das Kühlbett (4) überleiten,
**dadurch gekennzeichnet,**
daß die Querförderrollen (6) in vier Bereiche unterteilt sind, und zwar eine Einlaufposition (I), eine Zwischenposition (II), eine Bremsposition (III) sowie eine Abwurfposition (IV) aufweisen, daß die gleichen Umfangsabschnitte jeder Querförderrolle (6) in der Einlaufposition (I) mit einer großen Steigung, in der Bremsposition (III) mit einer Null-Steigung und auf entsprechenden Abschnitten der Zwischenposition (II) und der Abwurfposition (IV) mit einer Querfördersteigung der Schneckengänge (7,8) versehen sind, wobei Knüppel (11 bis 16) in den Einlauf- und Bremspositionen (I, III) verharren, während andere Knüppel unbeeinflußt davon ihren Quertransport in den Zwischen- und Abwurfpositionen (II, IV) fortsetzen können.

2. Auflaufrollgang nach Anspruch 1,
**dadurch gekennzeichnet**,
daß die Querförderrollen (6) mit die Schneckengänge (7,8) bildenden Wulsten (9) versehen sind.

3. Auflaufrollgang nach Anspruch 1 oder 2,
**dadurch gekennzeichnet**,
daß die Steigung des Schneckengangs (7) der Querförderrollen (6) im Bereich der Einlaufposition (I) zumindest der maximal vorkommenden Knüppelabmessung entspricht und der im Bereich der Bremsposition (III) verlaufende Schneckengang (8) auf einem 180°-Abschnitt mit einer Null-Steigung versehen ist.

4. Auflaufrollgang nach einem oder mehreren der Ansprüche 1 bis 3,
**gekennzeichnet durch**
eine im Bremsbereich (18) angeordnete Bremsrutsche.

5. Auflaufrollgang nach einem oder mehreren der Ansprüche 1 bis 4,
**dadurch gekennzeichnet**,
daß das Kühlbett (4) ein Rechenkühlbett ist.

6. Auflaufrollgang nach einem oder mehreren der Ansprüche 1 bis 5,
**dadurch gekennzeichnet**,
daß die Querförderrollen (6) im Bereich der Abwurfposition (4) zum Überleiten der Knüppel (11 bis 16) aus der ersten in die zweite Rast der Rechen (21) des Kühlbettes (4) ausgebildet sind.

## Claims

1. Billet approach rollerway (2) for cooling beds (4), which consist of continuously driven augers (7, 8), which are arranged parallel to the rollerway rollers, with transverse conveying rollers (6) which have a zero inclination region and which take over the roll stock (11 to 16) from the rollerway rollers and conduct it transversely to the transport direction of the cooling bed (4), characterised thereby that the transverse conveying rollers (6) are divided into four regions and in particular have an entry position (I), an intermediate position (II), a braking position (III) as well as a release position (IV), that the same circumferential sections of each transverse conveying roller (6) are provided in the entry position (I) with a large inclination, in the braking position (III) with a zero inclination and at corresponding sections of the intermediate position (II) and the release position (IV) with a transverse conveying inclination, of the augers (7, 8), wherein billets (11 to 16) remain in the entry and braking positions (I, III) while other billets can, unaffected thereby, continue their transverse transport into the intermediate and release positions (II, IV).

2. Approach rollerway according to claim 1, characterised thereby that the transverse conveying rollers (6) are provided with beads (9) forming the augers (7, 8).

3. Approach rollerway according to claim 1 or 2, characterised thereby that the inclination of the auger (7) of the transverse conveying rollers (6) in the region of the entry position (I) corresponds at least to the maximum occurring billet dimension and the auger (8) extending in the region of the braking position (III) is provided with a zero inclination on a 180° section.

4. Approach rollerway according to one or more of claims 1 to 3, characterised by a braking slide arranged in the braking region (18).

5. Approach rollerway according to one or more of claims 1 to 4, characterised thereby that the cooling bed (4) is a rack cooling bed.

6. Approach rollerway according to one or more of claims 1 to 5, characterised thereby that the transverse conveying rollers (6) in the region of the release position (4) are constructed for conducting the billets (11 to 16) from the first to the second notch of the rack (21) of the cooling bed (4).

## Revendications

1. Train de rouleaux (2) d'accès au refroidisseurs (4) pour billettes, constitué par des rouleaux (6) de transport transversal, disposés parallèlement aux rouleaux du train de rouleaux, entraînés en continu et présentant des vis sans fin (7, 8) dont une section présente un pas nul, qui reprennent le produit laminé (11 à 16) des rouleaux du train de rouleaux et qui le transfèrent transversalement par rapport au sens du transport au refroidisseur (4), caractérisé en ce que les rouleaux (6) de transport transversal sont divisés en 4 parties, c'est-à-dire une position d'introduction (I), une position intermédiaire (II), une position de freinage (III) et une position de déchargement (IV), en ce que les sections périphériques correspondantes de chaque rouleau (6) de transport transversal présentent un pas élevé dans la position d'introduction (I), un pas nul dans la position de freinage (III) et, dans les sections correspondantes à la position intermédiaire (II) et à la position de déchargement (IV), un pas de transport transversal des vis (7, 8), des billettes (11 à 16) restant dans les positions d'introduction et de freinage (I, III) alors que d'autres billettes peuvent, indépendamment des premières, continuer leur déplacement transversal dans la position intermédiaire et la position de déchargement (II, IV).

2. Train de rouleaux d'accès selon la revendication 1, caractérisé en ce que les rouleaux (6) de transport transversal sont pourvus des bourrelets (9) formant les vis sans fin (7, 8).

3. Train de rouleaux d'accès selon la revendication 1 ou 2, caractérisé en ce que le pas de la vis sans fin (7) des rouleaux (6) de transport transversal, dans la zone d'introduction (I), correspond au minimum à la dimension maximale des billettes qui se présentent et en ce que la vis sans fin (8) se trouvant au niveau de la position de freinage (III) est pourvue d'un pas nul sur une section de 180°.

4. Train de rouleaux d'accès selon une ou plusieurs des revendications 1 à 3, caractérisé par une goulotte de freinage disposée dans la zone de freinage (18).

5. Train de rouleaux d'accès selon une ou plusieurs des revendications 1 à 4, caractérisé en ce que le refroidisseur (4) est un refroidisseur à râteau.

6. Train de rouleaux d'accès selon une ou plusieurs des revendications 1 à 5, caractérisé en ce que les rouleaux (6) de transport transversal, au niveau de la position de déchargement (IV), sont prévus pour le transfert des billettes (11 à 16) du premier au deuxième cran du râteau (21) du refroidisseur (4).
